# EUROPÄISCHE PATENTANMELDUNG

(11) **EP 1 130 255 A1**
(43) Veröffentlichungstag der Anmeldung: **05.09.2001**
(21) Anmeldenummer: 00811002.5
(22) Anmeldetag: 27.10.2000
(51) Int. Cl.: F03B 9/00, F03D 5/02, F03D 9/00

(54) **Verfahren und Einrichtung zur Kraftgewinnung**

(30) Priorität: 03.03.2000 CH 42000
(71) Anmelder: Epprecht, Urs, 5415 Rieden (CH)
(72) Erfinder: Epprecht, Urs, 5415 Rieden (CH)

(57) **Zusammenfassung**

Das ganze Gerät besteht zur Hauptsache aus einem Endlos-Strang (1) der senkrecht über zwei Rollen (2) und (3) gespannt ist. Auf diesem Endlos-Strang sind Wasserbecher (6) angeordnet, und je auf einem Teilbereich Zusatzgewichte (7), respektive Magnete (8). Zudem sind auf dem Chassis Spulen (9) angebracht. Auf der oberen Achse (4) ist eine grössere Rolle (10) angebracht, über die ein weiterer Endlos-Strang (12) der mit Windbechern (13) bestückt ist gespannt. Dieser Windantrieb dient hier lediglich zur Unterstützung des Wasserantriebs.

Wird nun Wasser in die Wasserbecher (6) eingefüllt, werden auf der gegenüberliegenden Seite die Zusatzgewichte (7) hochgezogen bis sie über die obere Rolle (2) gezogen werden. Nun werden die Zusatzgewichte (7) durch ihre Schwerkraft zum Antrieb. Zudem werden nun auch die Magnete (8) an den Spulen (9) vorbeigeführt, wodurch der Generator in Funktion tritt. Sind die Zusatzgewichte (7) wieder am untersten Teil angelangt, ist auch der letzte Magnet (8) an den Spulen (9) vorbei, der Generator wird dadurch inaktiviert, und der ganze Vorgang beginnt nun von neuem.

## Beschreibung

Die Probleme des heutigen Energiebedarfes und die damit verbundenen Umweltprobleme sind hinlänglich bekannt.
Was aber weniger bekannt ist, ist die Tatsache dass die in einem weit entfernten Kraftwerk erzeugte Energie auf dem Transport zum Endverbraucher zum grösseren Teil (etwa 2/3) durch den Widerstand der Leitungen wieder verloren geht.
Es währe also oekologisch sinnvoller, wenn diese Energie soweit wie möglich gleich an derjenigen Stelle produziert würde, an der Sie auch benötigt wird (dezentrale Kleinkraftwerke).

Zum jetzigen Zeitpunkt sind auf diesem Sektor natürlich vor allem Sonnenkollektoren interessant, doch scheitern diese leider noch an ihrem hohen Preis- Leistungsverhältnis.
Eine Weitere Energie, die da wo sie ja eigentlich vorhanden wäre, viel zu wenig ausgenutzt wird, ist die Windenergie. In Küstennahen Gebieten wird sie auch genutzt, sie ist aber an entsprechender Lage, zum Beispiel auf Hochhäusern, Bergkuppen etc. auch im Mittelland nicht zu unterschätzen.

Es gibt aber noch weitere Energien, die meines Wissens noch nirgends ausgenutzt werden. Ich denke hier z.b. an all die vielen Kanalisationsrohre, Dachrinnen etc.

Bei all den hier angeschnittenen Energieformen besteht aber meistens das Problem dass sie nicht immer im gleichen Masse vorhanden sind, zum Beispiel Windenergie. Auch in einem Kanalisationsrohr in einem Hochhaus ist z.b. nachts nicht viel los, dafür ist aber zu bestimmten Zeiten, während des Tages viel Wasser dh. Energie vorhanden, und genau dies sollte z.b. für die Treppenhausbeleuchtung ausreichen!
Zweck der vorliegenden Erfindung ist es daher, die erwähnten verschiedenen und zeitlich unterschiedlich anfallenden Energieformen wahlweise ausnützen zu können, wobei sich die Möglichkeit bieten soll, in wechselnder Menge erzeugte Energie zu akkumulieren. Ausserdem soll dies alles auch noch möglichst kostengünstig sein und trotzdem möglichst effizient arbeiten.

Gegenstand der Erfindung ist daher zunächst ein Verfahren zur Kraftgewinnung unter Verwendung eines im wesentlichen vertikal umlaufenden Endlos-Strangs. Das Verfahren zeichnet sich dadurch aus, dass wahlweise einer oder mehrere der folgenden Antriebe zur Wirkung auf den Endlos-Strang gebracht werden:
- Wasserantrieb mittels am Strang angebrachter Becher
- Windantrieb mittels Windfangbechern
- am Strang befestigte Zusatz-Gewichtskörper.

Die erfindungsgemässe Einrichtung zur Ausführung dieses Verfahrens ist gekennzeichnet durch einen im wesentlichen vertikal umlaufenden Endlos-Strang, welcher mittel zum anbringen von Bechern, Zusatz-Gewichtskörpern und Magnetkörpern aufweist.

Die erfindungsgemässe Einrichtung ist als eine Art Baukasten-System anzusehen, das je nach den speziellen örtlichen Gegebenheiten zusammengestellt werden kann. So kann der Windantrieb, oder auch umgekehrt der Wasserantrieb je nach Umständen weggelassen werden.

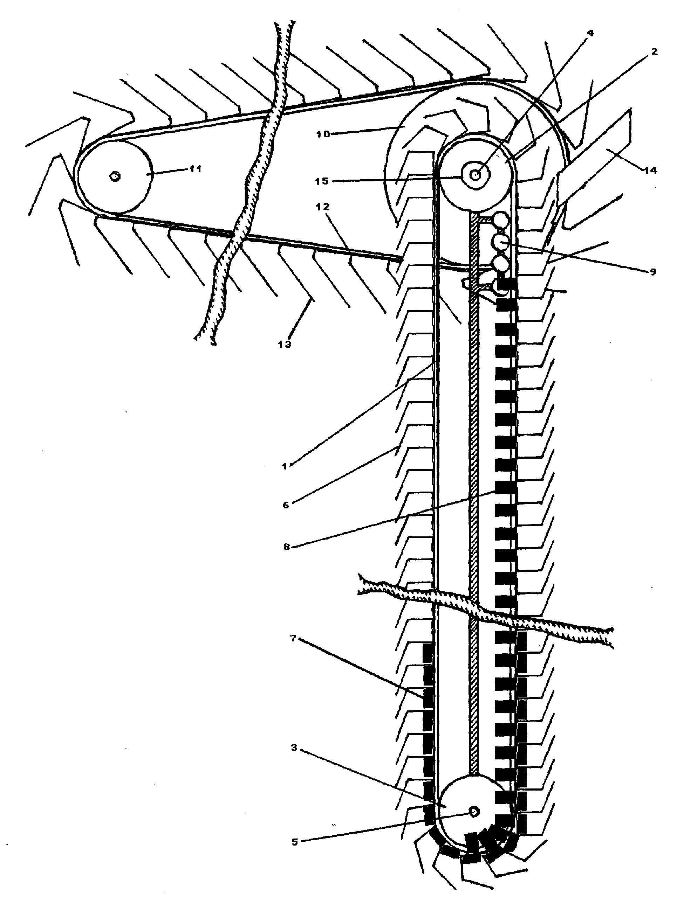

Die einzige Fig. zeigt ein Ausführungsbeispiel der Erfindung.

Die Einrichtung besteht zur Hauptsache aus einem Endlos-Strang 1
(z.b. Keilriemen, Förderband oder dergleichen) der senkrecht über zwei Rollen 2 und 3 gespannt ist.
Auf diesem Endlos-Strang sind auf der ganzen Länge Wasserbecher 6 angeordnet, und je auf einem Teilbereich Zusatzgewichte 7, respektive Magnete 8. Auf dem Chassis sind zudem gleich unterhalb der oberen Rolle 2 Spulen 9 angeordnet. Auf der oberen Achse 4 ist zudem eine grössere Rolle 10 angebracht, über die ein weiterer Endlos-Strang 12 der mit Windbechern 13 bestückt ist gespannt wird. Dieser Windantrieb ist hier lediglich zur weiteren Unterstützung des Wasserantriebes gedacht, kann aber gegebenfalls auch die Hauptantriebsfunktion übernehmen.
Die obere Achse 4 wird durch einen Freilauf 15 der hier als Rücklaufsicherung dient, in der Gegendrehrichtung gesperrt.
Ist der Endlos-Strang in Ruhestellung, befinden sich die Zusatzgewichte 7 in seinem untersten Teil also um die Rolle 3.
Wird nun Wasser in die Wasserbecher 6 eingefüllt, was natürlich möglichst weit oben geschehen soll zum Beispiel durch das Einfüllblech 14 (dies ist natürlich keine Bedingung z.b. Kanalisationsrohr e.v. auch irgendwo in der Mitte), werden auf der gegenüberliegenden Seite die Zusatzgewichte 7 hochgezogen. Wird nun die Wasserzufuhr zwischenzeitlich unterbrochen, so ist das Ganze durch die Rücklaufsicherung 15 gesperrt d.h. die bis dahin gesammelte Energie geht nicht verloren. Wird weiteres Wasser eingefüllt geht das Ganze Spiel weiter, bis die Zusatzgewichte 7 über die obere Rolle 2 gezogen werden. Nun werden die Zusatzgewichte 7 durch ihre Schwerkraft zum Antrieb, wobei ein genau definierter Zug auf dem Endlos-Strang entsteht. Zudem werden nun auch die Magnete 8 an den Spulen 9 vorbeigeführt, wodurch der Generator in Funktion tritt. Das spezielle ist in dieser Phase, dass das Gewicht nun zum grössten Teil in den Magneten hängt, d.h. die Reibung auf der oberen Rolle 2 wird durch den Generator zum grössten Teil aufgehoben! Dieser Generator erzeugt nun je nach Anordnung der Spulen 9 Wechsel oder Drehstrom, der natürlich durch Dioden gleichgerichtet werden kann, und so z.b. auf einen Akkumulator geladen werden kann. Sind die Zusatzgewichte 7 wieder am untersten Teil des Endlos-Strangs 1 angelangt, ist auch der letzte Magnet 8 an den Spulen 9 vorbei, der Generator wird dadurch inaktiviert, und der ganze Vorgang beginnt von neuem.

Falls ein Wasserantrieb erwünscht ist, werden Wasserbecher 6 ringsum auf dem Endlos-Strang angebracht. Diese Wasserbecher sollten so gestaltet sein, dass das Wasser bei stehendem Strang jeweils in den unteren Becher überlaufen kann.

Ist nicht genügend Wasser gewährleistet, oder wird zum Antrieb lediglich Windenergie genutzt, so kann eine Energiesammelfunktion mittels Zusatzgewichten 7 integriert werden.
Bei sehr wenig Wasser sollten die einzelnen Gewichte jedoch maximal das Gewicht des halben Fassungsvermögens der Wasserbecher 6 haben. Dadurch wird verhindert, dass der Riemen im Moment in dem sich die Gewichte 7 im untersten Teil befinden stehen bleibt. Zudem muss hier auch beachtet werden, dass zusätzlich auch noch Reibung entsteht, d.h. das ideale Gewicht des einzelnen Gewichtes liegt ca. bei 1/3 bis 1/2 des Fassungsvermögens des einzelnen Wasserbechers.

Ein Generator kann dadurch realisiert werden, indem am Endlos-Strang Magnete 8 und am Chassis gleich unterhalb der oberen Rolle Spulen 9 angebracht werden. Hierbei ist es wichtig dass die Spulen gleich unterhalb der oberen Rolle angebracht werden, da dadurch die Reibung Endlos-Strang - obere Rolle zu einem grossen Teil vermindert werden kann. Auch muss durch richtige Wahl der auf diese Art abgenommenen Leistung verhindert werden dass sich bei einem eventuellen weglassen der unteren Rolle 3 (siehe weiter unten) der Endlos-Strang aus der oberen Rolle 2 abhebt; d.h. beim weglassen der unteren Rolle 3 darf hier nicht zuviel Leistung abgenommen werden.

Die untere Rolle kann unter Umständen gänzlich weggelassen werden, wodurch ein nicht zu unterschätzender Teil der Reibung, und natürlich auch der Herstellungskosten eingespart werden können. Dies ruft jedoch ein Pendeln des ganzen Endlos-Strangs hervor, was in vielen Fällen natürlich unerwünscht ist.

Sollen Zusatzgewichte 7 angebracht werden, und Mechanische Kraft für weitere externe Geräte von der oberen Achse 4 abgenommen werden, kann es vorkommen das der Endlos-Strang bei verwendung eines Keilriemens in der Rolle 2 zum Durchrutschen neigt.
Dies kann dadurch verhindert werden, indem auf der gegenüberliegenden Seite der Gewichte 7 ein weiteres kleineres Gewicht angebracht wird, so dass der Keilriemen über der Rolle 2 immer genügend Spannung erhält.

Ein Windantrieb kann dadurch dazugefügt werden indem auf der oberen Achse 4 eine grössere Rolle 10 und je nach örtlichen gegebenheiten mindestens eine oder mehrere weitere Rollen 11 angebracht werden. Nun wird auch hier ein weiterer Endlos-Strang 12 gespannt. Auch hier werden Becher 13 angebracht, die gegenüber den Wasserbechern zwecks besserer Aerodinamik natürlich anders gestaltet sind (grösser, weiter auseinander, eventuell seitlich zueinander versetzt etc.).

Sollte mechanische Kraft für weitere externe Geräte (z.b. Kompressor etc.) von dem Gerät abgenommen werden so muss dies zwecks einsparung von Reibung immer von der oberen Achse 4 z.b. durch anringung einer weiteren Rolle geschehen.

Die beschriebene Einrichtung bringt folgende Vorteile:
- Der gesamte Aufbau des Gerätes wird dadurch extrem vereinfacht.
- Dadurch dass hier möglichst viele Teile weggelassen werden, werden Herstellungs- Unterhaltskosten und aber vor allem auch Reibung eingespart.
- Durch anbringung von Zusatzgewichten resp. Magneten auf nur einem bestimmten Teilbereich des Endlos-Strangs wird jede weitere Steuerung überflüssig.
- Bei integrierung von Zusatzgewichten wird auf einfache Art eine Energiesammelfunktion realisiert, wesshalb ein derartiger Wasser- und oder Windantrieb auch dann noch läuft, wenn zuwenig Wasser, Wind oder Bauhöhe vorhanden ist.
- Werden Magnete und Spulen angebracht, kann ein Generator integriert werden, wobei erstens die Reibung der Uebertragung der Energie aus dem treibenden Teil (Gewichte oder Becher) auf den Generator, und zweitens die Reibung auf der oberen Rolle 2 stark reduziert werden kann.
- Dadurch dass das Gerät vor allem in die Höhe baut, in der Grundfläche jedoch sehr beschränkt ist, kann es z.b. auch in Kanalisation oder an Dachrinnen eingesetzt werden.
- die Installationskosten beschränken sich auf ein absolutes Minimum, in vielen Fällen wird das gesamte Gerät lediglich an einem Haken aufgehängt.
- Muss das Gerät zu einem späteren Zeitpunkt z.b um die Leistung zu erhöhen in der Höhe erweitert werden, ist dies mit relativ geringem Kostenaufwand Möglich.

## Patentansprüche

1. Verfahren zur Kraftgewinnung unter Verwendung eines im wesentlichen vertikal umlaufenden Endlos-Strangs, **dadurch gekennzeichnet**, dass wahlweise einer oder mehrere der folgenden Antriebe zur Wirkung auf den Endlos-Strang gebracht werden:
- Wasserantrieb mittels am Strang angebrachter Becher
- Windantrieb mittels Windfang-Bechern
- am Strang befestigte Zusatz-Gewichtskörper.

2. Einrichtung zur Ausführung des Verfahrens nach Anspruch 1, gekennzeichnet durch einen im wesentlichen vertikal umlaufenden Endlos-Strang, welcher Mittel zum Anbringen von Bechern, Zusatz-Gewichtskörpern und MagnetKörpern aufweist.

3. Einrichtung nach Anspruch 2, gekennzeichnet durch einen weiteren umlaufenden Endlos-Strang, der mit Windfang-Bechern bestückt und mit dem vertkalen Strang antriebsverbunden ist.

4. Einrichtung nach Anspruch 3, **dadurch gekennzeichnet**, dass der mit den Windfang-Bechern bestückte Endlos-Strang über eine grössere Rolle geführt ist, auf deren Achse eine kleinere Rolle sitzt, über die der vertikale Endlos-Strang geführt ist.

5. Einrichtung nach Anspruch 2, **dadurch gekennzeichnet**, dass der vertikale Endlos-Strang unten frei hängend ist.

6. Einrichtung nach Anspruch 2, gekennzeichnet durch am vertikalen Endlos-Strang befestigte Magnetkörper, die mit festen Spulen zusammenwirken, um elektrischen Strom zu erzeugen.

7. Einrichtung nach Anspruch 2, **dadurch gekennzeichnet**, dass die Welle der obenliegenden Umlenkrolle des vertikalen Endlos-Strangs mit einer Rücklaufsperre ausgerüstet ist.

8. Einrichtung nach Anspruch 2, **dadurch gekennzeichnet**, dass die Zusatz-Gewichtskörper und die Magnetkörper je nur einen Teilabschnitt der Länge des Endlos-Stranges besetzen.

9. Einrichtung nach Anspruch 2 und 3, **dadurch gekennzeichnet**, dass die Endlos-Stränge aus Keilriemen, Bändern oder Ketten bestehen.
